# FASCICULE DE BREVET EUROPEEN

(11) **EP 1 654 297 B1**
(45) Date de publication et mention de la délivrance du brevet: **19.09.2018**
(21) Numéro de dépôt: 04763377.1
(22) Date de dépôt: 21.07.2004
(51) Int. Cl.: C08G 18/10, C08G 18/36, C08G 18/42

(54) **MOUSSE DE POLYURETHANNE, PROCEDE DE FABRICATION ET UTILISATION**
POLYURETHANSCHAUMSTOFF, HERSTELLUNGSVERFAHREN DAFÜR UND VERWENDUNG DAVON
POLYURETHANE FOAM, METHOD FOR THE PRODUCTION AND USE THEREOF

(30) Priorité: 01.08.2003 FR 0309575
(43) Date de publication de la demande: 10.05.2006
(73) Titulaire: Saint-Gobain Innovative Materials Belgium, 1300 Wavre (BE)
(72) Inventeur: MOINEAU, Georges, 4800 Verviers (BE); MERTENS, Marc, B-4900 Spa (BE); PETIT, Dominique, B-4671 Blegny (BE)
(74) Mandataire: Saint-Gobain Recherche
(86) Numéro de dépôt international: PCT/EP2004/008145
(87) Numéro de publication internationale: WO 2005/014684

(56) Documents cités:
- EP-A- 0 714 929
- EP-A- 0 930 323
- US-A- 4 264 743

## Description

La présente invention se rapporte au domaine des matériaux cellulaires utilisables comme joint d'étanchéité, et concerne plus particulièrement une mousse de polyuréthanne, sa fabrication et son utilisation.

Dans le domaine de la construction automobile par exemple, il n'est pas aisé de fournir des solutions pour réaliser l'étanchéité entre des pièces fabriquées en série pour lesquelles les variations dimensionnelles sont acceptées avec de grandes tolérances.

Ce problème est d'autant plus critique pour des pièces qui sont rapportées sur des éléments de carrosserie extérieurs ou qui relient le compartiment moteur à l'habitacle, où le matériau d'étanchéité a une fonction multiple : réduction des vibrations, étanchéité à l'air, étanchéité à l'eau (circulation par temps de pluie, nettoyage à haute pression d'eau). On recherche donc des matériaux d'étanchéité qui soient assez souples pour accommoder les tolérances dimensionnelles sans engendrer des déformations des pièces à étanchéifier. De façon générale toutefois, la souplesse du matériau a tendance à pénaliser les performances d'étanchéité, en particulier à l'eau et les risques de fuite sont d'autant plus élevés que le joint est souple.

Dans l'industrie automobile, le matériau de prédilection est le polyuréthanne qui permet d'atteindre les niveaux de densité et de souplesse requis. Mais ce produit ne procure généralement pas l'étanchéité à l'eau souhaitée.

Une technique développée par la demanderesse consiste à réaliser un joint cellulaire sur chaque pièce, par dépose *in situ* d'une composition de joint par l'intermédiaire d'une tête d'extrusion guidée à la surface de la pièce. Cette technique, décrite notamment dans le document EP 930 323, permet de former une peau étanche sur toute la surface du joint garantissant notamment l'étanchéité à l'eau du matériau.

Cependant, cette technique suppose l'utilisation d'un équipement approprié dans chaque atelier, et n'est pas toujours adaptée en terme de coût.

C'est pourquoi, il serait souhaitable de disposer d'un matériau cellulaire prêt à l'emploi, sous forme notamment de ruban éventuellement auto-adhésif.

Ces matériaux peuvent être couramment fabriqués par la technique dite de mousse couchée dans laquelle une composition de matière moussable est coulée en une couche plus ou moins épaisse sur une bande convoyeuse, la bande convoyeuse circule dans des postes de traitement (généralement thermique) de façon à produire une feuille de mousse réticulée d'une épaisseur maximum de 200 mm. La feuille est ensuite enroulée pour former un rouleau, dont sont tronçonnées des tranches fournissant un ruban enroulé sur lui-même. En raison du découpage en tranches, le ruban ne possède pas de peau sur ses surfaces latérales et les cellules de la mousse sont en contact direct avec l'atmosphère.

Dans une variante du procédé, dite « slabstock », la quantité de matière moussable est plus importante de façon à obtenir un rapport hauteur/largeur proche de l'unité. Une quantité importante de mélange moussant est déversée sur une bande réceptrice typiquement pour produire une épaisseur de matériau moussé de l'ordre de 1 à 2 mètres. La masse est stockée pendant le temps nécessaire pour assurer une réticulation à coeur, puis est découpée en tranches horizontales, qui peuvent elles-mêmes être découpées en ruban comme décrit plus haut. Par suite de ces découpes, le matériau ne comporte aucune peau et les cellules de mousse sont en contact direct avec l'atmosphère de tous côtés.

Ces procédés produisent généralement des mousses avec des cellules ouvertes, afin d'éviter le phénomène de retrait qui se produit lorsque les cellules sont fermées. Or, l'exposition des cellules à l'environnement est pénalisante en terme d'étanchéité.

Ces techniques permettent néanmoins de fabriquer des mousses de polyuréthanne souples susceptibles d'accommoder les tolérances de l'industrie automobile.

Il a ainsi été proposé divers moyens de rendre hydrophobes les matériaux constituant des mousses souples susceptibles d'être fabriqués par ces procédés en vue d'une meilleure étanchéité à l'eau.

Une première repose sur l'imprégnation des mousses avec des produits hydrophobes, par incorporation de paraffines, goudrons, bitume, polybutadiène, dialkyl phtalate, résine de pétrole obtenu par polymérisation de coupes de craquage en C₄₋₉ (voir JP-A-55-71777).

Une autre voie consiste à utiliser comme constituant du mélange de polymérisation un polyol hydrophobe. Ainsi, le document US-4 264 743 décrit l'obtention d'une mousse de polyuréthanne flexible ou semi-rigide, à partir d'un composant polyisocyanate et d'un composant polyol dont une majeure partie consiste en un polyol dérivé de dimère d'acide gras ou d'huile de ricin.

La présence des chaînes lipophiles du dimère d'acide gras ou de l'huile de ricin augmente l'angle de contact de la matière constitutive de la mousse avec l'eau à 90° ou plus, ce qui améliore les propriétés d'étanchéité. La réaction entre le polyol et le polyisocyanate est effectuée en présence d'agent de moussage (eau ou autre), d'un tensioactif silicone en tant que stabilisateur de mousse et d'un catalyseur avec un rapport du polyisocyanate aux atomes d'hydrogène actifs dans le mélange (index généralement exprimé par le rapport molaire NCO/OH) d'au moins 0,9.

L'étanchéité à l'eau est mesurée en découpant un trou rond au centre d'un carré de mousse, en plaçant ce morceau de mousse en contact étroit entre deux plaques de plexiglas maintenues horizontales, la mousse étant comprimée de 75%, en introduisant de l'eau dans la cavité via un orifice pratiqué dans la plaque de plexiglas supérieure, et en mesurant pour des pressions d'eau données les fuites tout autour du carré de mousse.

Des exemples de produits de cette composition sont les produits de marque SUPERSEAL et SUPERSHEET commercialisés par NHK et RECTICEL. Il apparaît cependant que ces produits ne sont pas aussi souples ou étanches que certaines applications peuvent l'exiger, et pourraient donc être améliorés du point de vue de la souplesse en conservant une étanchéité à l'eau satisfaisante ou du point de vue de l'étanchéité à l'eau en conservant une souplesse similaire.

Ce but, ainsi que d'autres qui apparaissent par la suite, est résolu par la présente invention.

L'invention a ainsi pour objet une mousse souple de polyuréthanne étanche à l'eau obtenue par réaction d'un composant polyol qui comprend au moins un polyol hydrophobe et d'au moins un composant polyisocyanate en présence d'un agent de moussage caractérisé en ce qu'elle a une force à la compression inférieure à 12 kPa pour 50 % de compression suivant la norme ASTM D3574E, **en ce qu**'elle a une densité inférieure à 100 kg/m³ **et en ce que** le rapport molaire des fonctions isocyanate au total des fonctions alcool et des fonctions réactives (index) est inférieur ou égal à 0,85.

Dans la présente demande, « composant polyol » désigne un composé polyol unique ou un mélange de plusieurs composés polyols. De même, « composant polyisocyanate » désigne un polyisocyanate unique ou un mélange de polyisocyanates.

Selon l'invention, l'étanchéité à l'eau est qualifiée par un test dit « test du U » : on découpe dans une plaque de mousse un ruban de section carrée ou rectangulaire, on dispose ce ruban mis en forme de U entre deux plaques de verre transparentes serrées l'une contre l'autre, on verse de l'eau dans la concavité du U sur une hauteur suffisante pour créer la pression d'eau souhaitée, et on observe l'apparition de fuites sur le contour extérieur du U aussi bien aux interfaces avec les plaques, que dans l'épaisseur de la mousse. Selon ce test, les mousses de l'invention confèrent un joint étanche pendant au moins une heure pour une hauteur d'eau de 10 cm, pour une compression de la mousse de seulement 30%.

L'invention réalise un compromis souplesse/étanchéité inconnu à ce jour, la souplesse de la mousse pouvant être telle que sa force de compression soit aussi faible qu'environ 8 kPa (pour 50 % de compression) sans mettre en danger l'étanchéité.

La mousse selon l'invention a une densité inférieure à 100 kg/m³. Dans une réalisation préférée, la mousse a une densité faible, par exemple d'une densité inférieure ou égale à 60 kg/m³, notamment de l'ordre de 45 à 60 kg/m³.

La souplesse de la mouse selon l'invention peut être obtenue en limitant la tridimensionnalité du réseau de polyuréthanne de différentes façons, qui peuvent éventuellement se combiner.

Suivant un mode de réalisation, on choisit des matières premières dans lesquelles au moins un composant parmi le composant polyol, notamment au moins un polyol hydrophobe, et le composant polyisocyanate a une fonctionnalité strictement supérieure à 2, notamment d'au moins 2,1, et on joue sur la stoechiométrie du mélange, en choisissant un index inférieur ou égal à 0,85.

Selon la présente invention, l'index est défini comme le rapport molaire des fonctions isocyanate aux fonctions réactives vis-à-vis de l'isocyanate typiquement des groupes hydroxyle portés par un composé de type alcool ou par de l'eau.

En particulier chacun des composants polyol et polyisocyanate peut avoir une fonctionnalité supérieure à 2, notamment comprise entre 2 et 2,5.

La fonctionnalité supérieure à 2 des composants polyol et/ou polyisocyanate entraîne une augmentation rapide de la masse moléculaire du polyuréthanne issu de la réaction de ces composés. L'index relativement faible correspond à un excès de polyol ou d'autres fonctions alcool qui se traduit par la présence de chaînes macromoléculaires terminées par un groupe OH qui ne trouve pas de groupe isocyanate pour réagir avec lui, entraînant la rupture du réseau tridimensionnel. Il est néanmoins suffisant pour que le système soit bien réticulé, ce qui se vérifie par l'absence de récupération de matière organique par un test d'extraction par solvant.

De préférence, les composants polyol et polyisocyanate ont une fonctionnalité relativement limitée pour limiter la tridimensionnalité du réseau, facteur de rigidité. De manière avantageuse, le composant polyol a une fonctionnalité comprise entre 2,1 et 2,3, et le composant polyisocyanate a une fonctionnalité comprise entre 2,1 et 2,3.

Par ailleurs, un index inférieur ou égal à 0,85, notamment de l'ordre de 0,70 à 0,85 s'est révélé particulièrement avantageux du point de vue de la souplesse de la mousse.

Suivant un autre mode de réalisation, on peut conserver la stoechiométrie de la réaction avec un index voisin de 1, notamment inférieur ou égal à 1,1, mais en incorporant dans ce mélange au moins un composé de type alcool ou amine monofonctionnel (dont l'hydrogène actif du groupement OH ou NH₂ entre dans le calcul de l'index) et qui joue le rôle d'agent de terminaison, ce qui limite la tridimensionnalité. On choisit dans ce cas des matières premières polyol et/ou polyisocyanate plus quedifonctionnelles, c'est-à-dire que le composé polyol et/ou le composé polyisocyanate ontune fonctionnalité strictement supérieure à 2. Un tel composé alcool ou amine monofonctionnel peut être notamment choisi parmi un alcool aliphatique linéaire, ramifié, ou cyclique ou hétérocyclique, substitué ou non, par exemple en C₁₋₂₂, à chaîne aliphatique ou grasse notamment en C₁₂₋₂₂, par exemple méthanol, propanol, butanol, 2-éthyl hexyl alcool, isooctanol, dodécanol, un alcool aromatique en C₆ ou plus, voire des polymères terminés par des groupes hydoxyle.

L'utilisation d'un composé polyol hydrophobe contribue en grande partie à l'hydrophobicité de la mousse.

Un composé polyol hydrophobe utile selon l'invention comporte avantageusement une chaîne hydrocarbonée grasse, en particulier à au moins 12 atomes de carbone, de préférence au moins 16 ou 18.

Un polyol particulièrement préféré selon l'invention est dérivé de dimère d'acide gras. Il comporte avantageusement une chaîne grasse en C₂₀₋₄₄, de préférence en C₃₂₋₃₆. Il résulte de préférence de la double estérification de dimère d'acide gras par un polyol. A titre d'illustration, on peut citer les produits de marque TESLAC distribués par HITACHI.

Suivant une réalisation un peu moins préférée, le composant polyol peut être un mélange de polyol hydrophobe et de polyol non hydrophobe, notamment à chaîne polyéther ou polyester, où la quantité de polyol hydrophobe est majoritaire. Un composé polyol non hydrophobe est en effet utilisé en quantité limitée pour ne pas affecter négativement l'étanchéité à l'eau.

D'autre part, le composant polyisocyanate peut comprendre au moins un composant de fonctionnalité au moins égale à 2 de faible poids moléculaire choisi parmi le para-phénylène diisocyanate, le trans-1,4-cyclohexane diisocyanate, le 3-isocyanate-méthyl-3,3,5-triméthylcyclohexyl isocyanate, le naphtalène-1,5-diisocyanate, le méthylène-bisphénylisocyanate (MDI) et ses isomères méthylène-4,4'-bisphénylisocyanate (4,4'-MDI), méthylène-2,4'-bisphénylisocyanate (2,4'-MDI), méthylène-2,2'-bisphénylisocyanate (2,2'-MDI), le MDI brut ou polymérique, le 2,4-toluène diisocyanate (TDI) le 2,6-toluène diisocyanate (2,6-TDI). Il comprend de préférence majoritairement du méthylène-bis 4,4' phénylisocyanate (MDI), éventuellement en mélange avec d'autres polyisocyanates tels que ceux cités précédemment. Il s'est révélé tout particulièrement avantageux que ce composé comprenne une proportion significative, par exemple au moins 30 % en mole d'isomère 2,4' qui rompt la cristallinité des segments durs du polyuréthanne.

Suivant une réalisation un peu moins préférée, le composant polyisocyanate peut éventuellement comprendre un oligomère ou un polymère à terminaisons isocyanate, notamment un oligomère ou polymère de polyéther, polyester, polyoléfine, polybutadiène, polyisoprène, polydiméthylsiloxane, polycaprolactone, où l'oligomère ou le polymère a une masse moléculaire inférieure ou égale à 10000, de préférence de l'ordre de 250 à 4000 g/mol, en particulier de 300 à 1000 g/mol. De préférence, le squelette oligomère est de type polyester aliphatique et/ou aromatique, de préférence essentiellement aromatique, notamment dérivé de glycols aliphatiques, éventuellement le diéthylène glycol, et d'acides aliphatiques et /ou aromatiques ; ou polyéther, notamment polyoxyde d'éthylène et/ou de propylène ou polytétrahydrofuranne. Des exemples de composés polyisocyanates sont les produits de marque LUPRANAT de BASF, SUPRASEC de Huntsman ou MONDUR de Bayer . Un tel composé polyisocyanate oligomère est de préférence utilisé en quantité limitée pour ne pas affecter négativement l'étanchéité à l'eau.

L'agent de moussage utilisé pour la fabrication de la mousse est de préférence un agent de moussage chimique, c'est-à-dire qui réagit avec les constituants du mélange réactionnel pour libérer un gaz formateur de cellules. Un tel agent réactif entrant dans la composition du mélange moussable est avantageusement de l'eau. Elle réagit avec l'isocyanate pour dégager du dioxyde de carbone responsable du moussage. Il peut être combiné ou remplacé par un autre type d'agent de moussage physique (gaz pressurisé ou gaz volatil dissous).

Le mélange comprend en outre avantageusement un tensioactif stabilisateur de mousse, qui comporte de préférence au moins une fonction réactive vis-à-vis du composé polyisocyanate ou du composé polyol. Ces fonctions réactives permettent de créer un lien chimique entre le tensioactif et le polymère de polyuréthanne lui-même, ce qui limite les phénomènes de relargage de composés organiques, connu sous le nom d'embuage ou « fogging », et qui tend à créer des dépôts visibles sur les surfaces froides mêmes non voisines de la mousse, comme par exemple dans les véhicules où la ventilation peut entraîner les particules sur des distances importantes.

Un exemple de tensioactif de ce type est dérivé de polydiméthyl siloxane greffé avec des groupes hydroxyles, par exemple greffé avec un polymère possédant des groupes hydroxyles pendants, notamment greffés par une chaîne polyéther terminée par un groupement hydroxyle.

La mousse de polyuréthanne selon l'invention peut aussi renfermer un ou plusieurs autres additifs usuels tels que colorants, charges, agents thixotropes, retardateurs de flamme, anti-oxydants, fongicides, biocides. Comme le tensioactif, un tel autre additif peut être doté de fonctions réactives vis-à-vis du composé polyisocyanate ou polyol, de sorte qu'il est incorporé et lié au réseau polymère, limitant ainsi le phénomène d'embuage.

La mousse selon l'invention peut être obtenue par divers procédés, notamment un procédé de mousse couchée formant une plaque de mousse, ou un procédé de moulage, notamment par injection ou en moule ouvert pouvant former une pièce de mousse tridimensionnelle.

L'invention a également pour objet un procédé de fabrication d'une telle mousse de polyuréthanne. Il comprend les étapes suivantes :
- on prépare un mélange réactionnel comprenant le composant polyol, le composant polyisocyanate et l'agent de moussage,
- on coule le mélange réactionnel sur une bande convoyeuse,
- on fait circuler la bande convoyeuse et le mélange coulé à travers une étuve de réticulation.

Avantageusement, on dépose sur le mélange coulé une pellicule de protection supérieure, et on fait circuler la bande convoyeuse et le mélange coulé revêtu de la pellicule de protection supérieure à travers une étuve de réticulation. L'emploi d'une pellicule de protection supérieure permet la formation d'une peau superficielle étanche, et empêche le gaz formant la mousse de s'échapper par la surface du mélange coulé, contribuant ainsi à l'obtention d'une mousse de faible densité.

On peut aussi disposer préalablement sur la bande convoyeuse une pellicule de protection inférieure afin de contrôler la formation d'une peau étanche sur cette autre face.

De façon avantageuse, la pellicule de protection inférieure ou la pellicule de protection supérieure peut être munie d'un adhésif sur sa face en contact avec le mélange réactionnel, afin de constituer une mousse auto-adhésive.

On peut aussi séparer la pellicule de protection inférieure et/ou la pellicule de protection supérieure et l'on rapporte sur une face libre de la bande de mousse une autre pellicule munie d'un adhésif.

L'invention a également pour objet un autre procédé dans lequel on injecte ou on coule le mélange réactionnel dans un moule fermé ou ouvert, et on fait réticuler le mélange dans le moule.

L'invention a enfin pour objet l'utilisation d'une mousse telle que définie précédemment en tant que joint étanche à l'eau.

L'invention va maintenant être décrite plus en détail dans les exemples suivants non limitatifs.

### Préparation et mise en oeuvre du mélange réactionnel

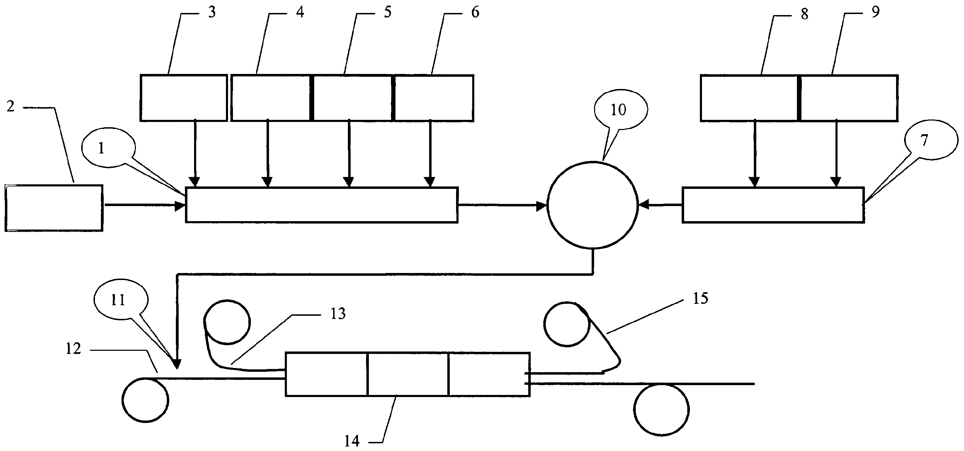

Elle se fait dans un dispositif de fabrication de mousse couchée tel que celui représenté à la figure 1.

On prépare en 1 une phase polyol en mélangeant à la température ambiante le ou les composés polyol 2 avec un tensioactif 3 et d'autres additifs tels que colorants ou charges 4, de l'eau 5 en tant qu'agent de moussage et un catalyseur 6. On prépare d'autre part en 7 une phase polyisocyanate, le cas échéant en mélangeant plusieurs composés isocyanate 8 et 9.

Puis on mélange la phase polyol avec la phase polyisocyanate à l'aide d'une tête de mélange 10 connue en soi. Pour obtenir une meilleure reproductibilité de la structure cellulaire, il peut être avantageux de contrôler la quantité de gaz contenue dans les matières selon l'état de l'art.

Le mélange de phase polyol et de phase polyisocyanate est déversé en 11 selon une épaisseur souhaitée sur une pellicule inférieure 12 constituée d'un substrat continu, anti adhérent ou non, non extensible. Des exemples de revêtements anti adhérents sont des matériaux tels que du papier siliconé, un tissu enduit de Téflon®. Immédiatement après l'enduction, une pellicule supérieure 13 identique ou différente de la pellicule 12 est appliquée sur la couche de mélange. L'ensemble pénètre ensuite dans une étuve 14 de réticulation, qui peut être divisée en différentes zones de température contrôlée indépendamment, à une vitesse et pendant un temps suffisant pour achever la réticulation. En sortie d'étuve, il peut y avoir un dispositif 15 pour éliminer par pelage la pellicule supérieure 13, et la récupérer sous forme d'un rouleau qui peut être recyclé dans le procédé de réticulation.

### Evaluation de la mousse

Elle se fait sur la mousse obtenue libérée de la ou des pellicules qui la protègent éventuellement, dégageant ainsi les deux peaux formées sur les surfaces principales de la plaque de mousse.

On procède sur la mousse à la détermination de la densité et de la force à compression de 50 % suivant la norme ASTM D3574E.

On réalise un test d'étanchéité évoqué plus haut : on découpe dans la plaque de mousse un ruban de 300 mm de long et d'au moins 12 mm de large et de préférence de section carrée. On dispose ce ruban mis en forme de U entre deux plaques de verre transparentes préalablement nettoyées à l'alcool isopropylique, les surfaces du ruban présentant une peau étant disposées contre le verre, alors que les surfaces latérales issues de la découpe sont exposées à l'espace entre les plaques de verre. Les plaques de verre sont espacées à l'aide d'intercalaire de manière à ce que le ruban soit comprimé de 30% par rapport à son épaisseur originale. On laisse l'assemblage se stabiliser pendant 30 min à 23 ± 2°C. Ensuite, on verse de l'eau dans la concavité du U de manière à obtenir une profondeur maximale de 100 mm. On mesure l'apparition de fuites sur le contour extérieur du U aussi bien aux interfaces avec les plaques, que dans l'épaisseur de la mousse. Pour passer ce test, aucune fuite ne doit être détectée après 60 minutes, aussi bien par défaut de résistance à la pression d'eau sur les surfaces de contact que par capillarité dans l'épaisseur de la mousse.

### Exemple 1 selon l'invention

Dans cet exemple, on utilise une formulation à base d'un composant polyol dérivé de dimère d'acide gras et d'un composant polyisocyanate à base de MDI polymérique. Les composants du mélange sont les suivants :
- Composé polyol A1 : il s'agit d'un polyol à base de dimère d'acide gras en C₃₂₋₃₆, qui a une fonctionnalité de 2,2 et un nombre OH de 71.
- Composé polyisocyanate B1 : il s'agit de MDI polymérique ayant une fonctionnalité de 2,1, un pourcentage d'isocyanate libre de 27,8% et un taux d'isomère 2,4' d'environ 70 % en mol ;
- Composé polyisocyanate B2 : il s'agit de MDI polymérique ayant une fonctionnalité de 2,7, un pourcentage d'isocyanate libre de 31,2% et un taux d'isomère 2,4' d'environ 35 % en mol.
- Agent de moussage : eau
- Surfactant silicone greffé hydroxyle NIAX de WITCO ayant un nombre OH de 125.
- Pigment noir : dispersion de noir de carbone à 20% en poids dans du diisodécylphtalate (DIDP)
- Catalyseur de gélification.

### Exemples 2, 4 et 5 selon l'invention et exemple 3 non conforme à l'invention.

Ces exemples illustrent des variantes où l'on fait varier le rapport NCO/OH et la nature du composant polyisocyanate.

### Exemple 6 non conforme à l'invention

Cet exemple illustre la réalisation d'une mousse plus dure par l'emploi d'un isocyanate de fonctionnalité élevée.

### Exemple comparatif 1

Dans cet exemple, on évalue une mousse souple commercialisée sous le nom SUPERSHEET H qui est fabriquée à base de polyol dérivé de dimère d'acide gras et de toluène diisocyanate.

### Exemple comparatif 2

Dans cet exemple, on évalue une mousse souple également à base de polyol dérivé d'acide dimère commercialisée sous le nom SUPERSEAL qui est une mousse obtenue par le procédé slabstock.

### Exemple comparatif 3

Dans cet exemple, on évalue une mousse souple obtenue à partir de polyols non hydrophobe de type polyéther polyol des caractéristiques suivantes :
- polyol A 2.1. : fonctionnalité = 3 nombre OH = 42
- polyol A 2.2. : fonctionnalité = 4 nombre OH= 475
- polyol A 2.3. : fonctionnalité = 3 nombre OH= 29

Les détails de formulation et les propriétés des produits sont reportés dans le tableau 1 suivant.

**Tableau 1**

| Exemple Formulation (parts pondérales) | Ex 1 | Ex 2 | Ex 3 | Ex. 4 | Ex 5 | Ex 6 | Ex comp 1 | Ex comp 2 | Ex. comp. 3 |
|---|---|---|---|---|---|---|---|---|---|
| A 1 | 100 | 100 | 100 | 100 | 100 | 100 | n.d. | n.d. | - |
| A 2.1. | - | - | - | - | - | - | n.d. | n.d. | 100 |
| A 2.2. | - | - | - | - | - | - | n.d. | n.d. | 12,8 |
| A 2.3. | - | - | - | - | - | - | n.d. | n.d. | 2,1 |
| Eau | 2,6 | 2,6 | 2,6 | 2,6 | 2,6 | 1,6 | n.d. | n.d. | 3,7 |
| Catalyseur | 1,5 | 1,5 | 1,5 | 1,5 | 1,5 | 0,5 | n.d. | n.d. | 0,3 |
| Surfactant | 0,5 | 0,5 | 0,5 | 0,5 | 0,5 | 0,5 | n.d. | n.d. | 1,5 |
| Pigment noir | 4,8 | 3 | 4,8 | 4,8 | 3 | - | n.d. | n.d. | 4,78 |
| B1 | 41,4 | 44,0 | 46,4 | 48,7 | 51,7 | 0 | n.d. | n.d. | 51 |
| B2 | 7,3 | 7,8 | 8,2 | 0 | 0 | 31,8 | n.d. | n.d. | 17 |
| Index NCO/OH | 0,80 | 0,85 | 0,90 | 0,80 | 0,85 | 0,80 | | | 0,80 |
| Densité (kg/m³) | 52 | 48 | 46 | 52 | 48 | 100 | 55 | 55 | 54 |
| Peaux | 2 | 2 | 2 | 2 | 2 | 2 | 2 | 0 | 2 |
| Force à compression (kPa) | 8 | 10 | 12 | 7,1 | 8,9 | 20 | 15,9 | 12 | 12 |
| Test d'étanchéité* | S | S | S | S | S | S | S | NS | NS |

| | | | | | | | | | |
|---|---|---|---|---|---|---|---|---|---|
| * S = Satisfaisant - NS = Non satisfaisant | | | | | | | | | |

La comparaison des exemples 1 et 2 montre que le choix d'un index faible améliore de façon très sensible la souplesse sans pénaliser l'étanchéité à l'eau.

Dans les exemples 4 et 5, la souplesse est améliorée par la fonctionnalité plus faible du composant polyisocyanate.

A l'exemple 6, l'emploi d'un isocyanate de haute fonctionnalité donne une mousse plus dense et plus dure.

L'exemple 1 réalise un compromis entre l'étanchéité à l'eau du produit comparatif 1 et la souplesse du produit comparatif 2.

## Revendications

1. Mousse souple de polyuréthanne étanche à l'eau obtenue par réaction d'un composant polyol qui comprend au moins un polyol hydrophobe comportant une chaîne hydrocarbonée grasse, et d'un composant polyisocyanate en présence d'un agent de moussage **caractérisée en ce qu'**elle a une force à la compression inférieure à 12 kPa pour 50 % de compression suivant la norme ASTM D3574E, **en ce qu'**elle a une densité inférieure à 100 kg/m³, **et en ce que** le rapport molaire des fonctions isocyanate au total des fonctions alcool et des fonctions réactives (index) est inférieur ou égal à 0,85.

2. Mousse de polyuréthanne selon la revendication 1, **caractérisée par** une force à la compression de l'ordre de 8 à 12 kPa pour 50 % de compression.

3. Mousse de polyuréthanne selon la revendication 1 ou 2, **caractérisée en ce qu'**elle a une densité inférieure ou égale à 60 kg/m³.

4. Mousse de polyuréthanne selon l'une quelconque des revendications précédentes **caractérisée en ce qu'**au moins un composant parmi le composant polyol et le composant polyisocyanate a une fonctionnalité strictement supérieure à 2, notamment d'au moins 2,1.

5. Mousse de polyuréthanne selon l'une quelconque des revendications précédentes **caractérisée en ce que** l'index isocyanate est de l'ordre de 0,70 à 0,85.

6. Mousse de polyuréthanne selon l'une quelconque des revendications précédentes, **caractérisée en ce que** le composant polyol réagit avec le composant polyisocyanate en présence d'un composant alcool ou amine monofonctionnel.

7. Mousse de polyuréthanne selon l'une quelconque des revendications précédentes, **caractérisée en ce que** le polyol hydrophobe est dérivé de dimère d'acide gras, notamment résultant de la double estérification de dimère d'acide gras par un polyol.

8. Mousse de polyuréthanne selon l'une quelconque des revendications précédentes, **caractérisée en ce que** le composant polyisocyanate comprend majoritairement du méthylène-bis 4,4' phénylisocyanate (4,4' MDI).

9. Mousse de polyuréthanne selon la revendication 8, **caractérisée en ce que** le composant polyisocyanate comprend au moins 30 % en mol d'isomère 2,4' MDI.

10. Mousse de polyuréthanne selon l'une quelconque des revendications précédentes, **caractérisée en ce que** l'agent de moussage comprend de l'eau.

11. Mousse de polyuréthanne selon l'une quelconque des revendications précédentes, **caractérisée en ce qu'**elle est obtenue en présence d'au moins un additif, notamment un tensioactif, comportant au moins une fonction réactive vis-à-vis du composé polyisocyanate ou du composé polyol.

12. Procédé de fabrication d'une mousse de polyuréthanne selon l'une quelconque des revendications précédentes, **caractérisé en ce qu'**il comprend les étapes suivantes :
- on prépare un mélange réactionnel comprenant le composant polyol, le composant polyisocyanate et l'agent de moussage,
- on coule le mélange réactionnel sur une bande convoyeuse,
- on fait circuler la bande convoyeuse et le mélange coulé à travers une étuve de réticulation.

13. Procédé selon la revendication 12, **caractérisé en ce que** l'on dépose sur le mélange coulé une pellicule de protection supérieure, et on fait circuler la bande convoyeuse et le mélange coulé revêtu de la pellicule de protection supérieure à travers une étuve de réticulation.

14. Procédé selon la revendication 12 ou 13, **caractérisé en ce que** l'on dispose préalablement sur la bande convoyeuse une pellicule de protection inférieure.

15. Procédé selon la revendication 13 ou 14, **caractérisé en ce que** la pellicule de protection inférieure ou la pellicule de protection supérieure est munie d'un adhésif sur sa face en contact avec le mélange réactionnel.

16. Procédé selon l'une des revendications 13 à 15, **caractérisé en ce que** l'on sépare la pellicule de protection inférieure et/ou la pellicule de protection supérieure et l'on rapporte sur une face libre de la bande de mousse une autre pellicule munie d'un adhésif.

17. Procédé de fabrication d'une mousse de polyuréthanne selon l'une quelconque des revendications 1 à 11, **caractérisé en ce qu'**il comprend les étapes suivantes :
- on prépare un mélange réactionnel comprenant le composant polyol, le composant polyisocyanate et l'agent de moussage,
- on injecte ou on coule le mélange réactionnel dans un moule fermé ou ouvert et
- on fait réticuler le mélange dans le moule.

18. Utilisation de la mousse de polyuréthanne selon l'une quelconque des revendications 1 à 11 en tant que joint étanche à l'eau.

## Patentansprüche

1. Wasserdichter flexibler Polyurethanschaumstoff, welcher durch eine Reaktion einer Polyolkomponente, die mindestens ein hydrophobes Polyol umfasst, das eine Fettkohlenwasserstoffkette umfasst, und einer Polyisocyanatkomponente in Anwesenheit eines Schaumbildners erhalten wird,
**dadurch gekennzeichnet, dass** dieser eine Kompressionskraft von weniger als 12 kPa für eine Kompression von 50 % gemäß der Norm ASTM D3574E aufweist, dadurch, dass dieser eine Dichte von weniger als 100 kg/m aufweist, und dadurch, dass das Molverhältnis der Isocyanatfunktionen zur Gesamtheit der Alkoholfunktionen und der reaktiven Funktionen (Index) kleiner oder gleich 0,85 ist.

2. Polyurethanschaumstoff nach Anspruch 1,
**gekennzeichnet durch** eine Kompressionskraft in der Größenordnung von 8 bis 12 kPa für eine Kompression von 50 %.

3. Polyurethanschaumstoff nach Anspruch 1 oder 2,
**dadurch gekennzeichnet, dass** dieser eine Dichte von kleiner oder gleich 60 kg/m³ aufweist.

4. Polyurethanschaumstoff nach einem der vorhergehenden Ansprüche,
**dadurch gekennzeichnet, dass** mindestens eine Komponente unter der Polyolkomponente und der Polyisocyanatkomponente eine Funktionalität streng größer als 2, insbesondere von mindestens 2,1,
aufweist.

5. Polyurethanschaumstoff nach einem der vorhergehenden Ansprüche,
**dadurch gekennzeichnet, dass** der Isocyanatindex in der Größenordnung von 0,70 bis 0,85 liegt.

6. Polyurethanschaumstoff nach einem der vorhergehenden Ansprüche,
**dadurch gekennzeichnet, dass** die Polyolkomponente mit der Polyisocyanatkomponente in Anwesenheit einer monofunktionellen Alkohol- oder Aminkomponente reagiert.

7. Polyurethanschaumstoff nach einem der vorhergehenden Ansprüche,
**dadurch gekennzeichnet, dass** das hydrophobe Polyol von einem Fettsäuredimer abgeleitet ist, insbesondere erhalten aus der doppelten Veresterung des Fettsäuredimers durch ein Polyol.

8. Polyurethanschaumstoff nach einem der vorhergehenden Ansprüche,
**dadurch gekennzeichnet, dass** die Polyisocyanatkomponente mehrheitlich 4,4'-Methylenbisphenylisocyanat (4,4'-MDI) umfasst.

9. Polyurethanschaumstoff nach Anspruch 8,
**dadurch gekennzeichnet, dass** die Polyisocyanatkomponente mindestens 30 Mol-% des Isomers von 2,4'-MDI umfasst.

10. Polyurethanschaumstoff nach einem der vorhergehenden Ansprüche,
**dadurch gekennzeichnet, dass** der Schaumbildner Wasser umfasst.

11. Polyurethanschaumstoff nach einem der vorhergehenden Ansprüche,
**dadurch gekennzeichnet, dass** dieser in Anwesenheit mindestens eines Additivs erhalten wird, insbesondere eines grenzflächenaktiven Stoffs, umfassend mindestens eine reaktive Funktion gegenüber der Polyisocyanatverebindung oder der Polyolverbindung.

12. Verfahren zur Herstellung eines Polyurethanschaumstoffs nach einem der vorhergehenden Ansprüche,
**dadurch gekennzeichnet, dass** dieses die folgenden Schritte umfasst:
- eine Reaktionsmischung wird hergestellt, umfassend die Polyolkomponente, die Polyisocyanatkomponente und den Schaumbildner,
- die Reaktionsmischung wird auf ein Förderband gegossen,
- das Förderband wird zirkulieren gelassen und die Mischung durch einen Vernetzungsofen fließen gelassen.

13. Verfahren nach Anspruch 12,
**dadurch gekennzeichnet, dass** auf der gegossenen Mischung ein oberer Schutzfilm abgeschieden wird, und das Förderband zirkulieren gelassen wird und die Mischung, die mit dem oberen Schutzfilm beschichtet ist, durch einen Vernetzungsoffen fließen gelassen wird.

14. Verfahren nach Anspruch 12 oder 13,
**dadurch gekennzeichnet, dass** zuvor auf dem Förderband ein unterer Schutzfilm aufgebracht wird.

15. Verfahren nach Anspruch 13 oder 14,
**dadurch gekennzeichnet, dass** der untere Schutzfilm oder der obere Schutzfilm mit einem Haftmittel auf seiner Fläche versehen ist, die mit der Reaktionsmischung in Kontakt steht.

16. Verfahren nach einem der Ansprüche 13 bis 15,
**dadurch gekennzeichnet, dass** der untere Schutzfilm und/oder der obere Schutzfilm abgetrennt werden und auf einer freien Fläche des Schaumstoffbands ein anderer Film aufgebracht wird, der mit einem Haftmittel versehen ist.

17. Verfahren zur Herstellung eines Polyurethanschaumstoffs nach einem der Ansprüche 1 bis 11,
**dadurch gekennzeichnet, dass** dieses die folgenden Schritte umfasst:
- eine Reaktionsmischung wird hergestellt, welche die Polyolkomponente, die Polyisocyanatkomponente und den Schaumbildner umfasst,
- die Reaktionsmischung wird in eine geschlossene oder offene Form eingespritzt oder gegossen, und
- die Mischung wird in der Form vernetzen gelassen.

18. Verwendung eines Polyurethanschaums nach einem der Ansprüche 1 bis 11 als wasserdichte Dichtung.

## Claims

1. Water-impermeable flexible polyurethane foam obtained by reacting a polyol component, which comprises at least one hydrophobic polyol comprising a fatty hydrocarbon chain, with at least one polyisocyanate component in the presence of a foaming agent, **characterized in that** it has a compression force of less than 12 kPa for 50% compression according to the ASTM D3574E standard, **in that** it has a density of less than 100 kg/m³, and **in that** the molar ratio of the isocyanate functional groups to the total of the alcohol functional groups and reactive functional groups (the index) is less than or equal to 0.85.

2. Polyurethane foam according to Claim 1, **characterized by** a compression force of around 8 to 12 kPA for 50% compression.

3. Polyurethane foam according to Claim 1 or 2, **characterized in that** it has a density under or equal to 60 kg/m³.

4. Polyurethane foam according to any one of the preceding claims, **characterized in that** at least one component from the polyol component and the polyisocyanate component has a functionality strictly greater than 2, especially at least 2.1.

5. Polyurethane foam according to any one of the preceding claims, **characterized in that** the isocyanate index is around 0.70 to 0.85.

6. Polyurethane foam according to any one of the preceding claims, **characterized in that** the polyol component reacts with the polyisocyanate component in the presence of a monofunctional amine or alcohol component.

7. Polyurethane foam according to any one of the preceding claims, **characterized in that** the hydrophobic polyol is derived from a fatty acid dimer, especially one resulting from the double esterification of a fatty acid dimer by a polyol.

8. Polyurethane foam according to any one of the preceding claims, **characterized in that** the polyisocyanate component comprises predominantly 4,4'-methylene-bis(phenylisocyanate)(4,4 'MDI).

9. Polyurethane foam according to Claim 8, **characterized in that** the polyisocyanate component contains at least 30 mol% of the 2,4'MDI isomer.

10. Polyurethane foam according to any one of the preceding claims, **characterized in that** the foaming agent comprises water.

11. Polyurethane foam according to any one of the preceding claims, **characterized in that** it is obtained in the presence of at least one additive, especially a surfactant, having at least one reactive functional group that reacts with the polyisocyanate compound or with the polyol compound.

12. Process for manufacturing a polyurethane foam according to any one of the preceding claims, **characterized in that** it comprises the following steps:
- a reaction mixture comprising the polyol component, the polyisocyanate component and the foaming agent is prepared;
- the reaction mixture is cast on a conveyor belt; and
- the conveyor belt and the cast mixture are made to run through a crosslinking oven.

13. Process according to Claim 12, **characterized in that** an upper protective film is deposited on the cast mixture, and the conveyor belt and the cast mixture coated with the upper protective film are made to run through a crosslinking oven.

14. Process according to Claim 12 or 13, **characterized in that** a lower protective film is placed beforehand on the conveyor belt.

15. Process according to Claim 13 or 14, **characterized in that** the lower protective film or the upper protective film is provided with an adhesive on its face in contact with the reaction mixture.

16. Process according to one of Claims 13 to 15, **characterized in that** the lower protective film and/or the upper protective film are removed and another film provided with an adhesive is attached to a free face of the foam strip.

17. Process for manufacturing a polyurethane foam according to any one of Claims 1 to 11, **characterized in that** it comprises the following steps:
- a reaction mixture comprising the polyol component, the polyisocyanate component and the foaming agent is prepared;
- the reaction mixture is injected or cast in a closed or open mold; and
- the mixture is crosslinked in the mold.

18. Use of the polyurethane foam according to any one of Claims 1 to 11 as a water-impermeable seal.
